# EUROPEAN PATENT SPECIFICATION

(11) **EP 3 176 509 B1**
(45) Date of publication and mention of the grant of the patent: **16.10.2019**
(21) Application number: 15197209.8
(22) Date of filing: 01.12.2015
(51) Int. Cl.: F24C 15/10, F24C 15/32, A47J 27/04

(54) **COOKING HOB WITH STEAM GENERATOR**
KOCHFELD MIT DAMPFERZEUGER
TABLE DE CUISSON AVEC GÉNÉRATEUR DE VAPEUR

(43) Date of publication of application: 07.06.2017
(73) Proprietor: Electrolux Appliances Aktiebolag, 105 45 Stockholm (SE)
(72) Inventor: CECCOLI, Carlo Andrea, 47122 Forli (IT)
(74) Representative: Electrolux Group Patents

(56) References cited:
- EP-A1- 1 658 798
- DE-A1-102005 052 274
- FR-A1- 2 614 976
- GB-A- 2 176 695
- US-A- 2 181 434
- US-A- 3 742 931
- US-A- 4 197 791
- US-A1- 2012 024 164

## Description

The present invention relates to a cooking hob with a steam generator according to the preamble of claim 1. Further, the present invention relates to a method for controlling a steam cooking process performed by a cooking hob with at least one steam generator.

The preparing and cooking of food stuff is increasingly performed by a steam cooking process. Usually, the steam cooking process is performed by special cooking devices. For example, a steam cooking pot is arranged above a compatible steam generator. Said steam generator may comprise an own heating element and water reservoir. Further, the steam generator is arrangeable upon a cooking hob, so that water in the water reservoir is heated up. In the latter case, the steam generator requires no own heating element. Often, the steam cooking process is performed by freestanding cooking devices.

US 2012/0024164 A1 discloses a cooking appliance with a steam generation part. The steam is selectively supplied to a cooktop part or a steam cooking part. The steam supplied to the cooktop part is used for cleaning a top plate. The steam supplied to the steam cooking part is used for cooking food. A steam chamber is arranged upon or beneath a recess of the top plate. The steam chamber includes steam holes in a circumferential surface and/or in a bottom surface of said steam chamber. The steam chamber is provided for receiving food directly. A steam generation part includes as heating chamber, a steam heater, a water supply tank, a water supply valve and a temperature sensor. A lid is provided for closing the recess of the top plate.

US 3,742,931 discloses a steam cooker comprising a base and a cover hingedly connected to an upper rear edge of said base. A perforated plate covers the base. A steam generation part is arranged inside the base and beneath the perforated plate. A food processing compartment is formed between the closed cover and the perforated plate.

DE 10 2005 052 274 A1 discloses a cooking hob comprising a separate cooking plate for each cooking zone. The cooking plates are supported separately and include weight sensors, so that the weight of a cooking pot upon the cooking plates is detected. The detected changes in weight are used for automatic cooking programs. The heating elements are fixed at the bottom sides of the cooking plates. The cooking plates are made of ceramic glass.

US 4,197,791 discloses an electric steamer for simultaneously steaming a frankfurter and warming an accompanying frankfurter bun. The steamer comprises a water reservoir with an electric heater. A perforated support rack is arranged above the water reservoir for supporting the frankfurter. A bun-supporting cover is removably mountable above the reservoir in order to define a steaming chamber. The water reservoir includes inclined side walls, wherein the diameter of said water reservoir increases from the bottom to the top. The perforated support rack and the bun-supporting cover are supported by the side walls of the water reservoir.

GB 2 176 695 A discloses a steam cooking apparatus. The level of the water in a water reservoir of a steam generator is detected, so that the water level is kept between upper and lower levels. Further, the pressure in a heating chamber is detected. If said pressure exceeds a preset low pressure, then the steam is injected into the water reservoir and condenses there.

It is an object of the present invention to provide a cooking hob with a steam generator, which allows a steam cooking process with a standard steam cooking pot by low complexity.

The object is achieved by a cooking hob with a steam generator according to claim 1.

According to the present invention:
- the lid includes a plurality of lid holes permeable for steam,
- the lid and/or a portion of the glass ceramic panel encircling said lid are provided for supporting a standard steam cooking pot or a bamboo steamer, so that steam is directed from the water reservoir through the lid holes into the steam cooking pot or the bamboo steamer, respectively,
- the lid comprises a lid frame attached at an outer portion of the bottom side of said lid and made of at least one polymeric material,
- the cooking hob comprises at least one water level sensor arranged at or in the water reservoir,
- the cooking hob comprises a water tap connected to the water reservoir on the one hand and connectable or connected to a water supply on the other hand, and
- the cooking hob comprises at least one temperature sensor arranged at or in the water reservoir and provided for detecting the temperature of the water in the water reservoir.

The cooking hob according to the present invention comprises an integrated steam generator. The cooking hob with steam generator is compatible with every kind of standard steam cooking pot and bamboo steamers. The cooking hob with steam generator injects real steam directly into the steam cooking pot or bamboo steamer, respectively. The design of the cooking hob with steam generator is similar as a conventional cooking hob without steam generator. The steam generator is unremarkably integrated within the cooking hob.

For example, the lid is made of ceramic glass, wherein preferably said lid is made of the same material as the glass ceramic panel. The surfaces of the lid and the glass ceramic panel may have the same design, which is aesthetically advantageous.

In particular, the size of the lid is marginally smaller than the size of the recess in the glass ceramic panel, wherein preferably the recess is formed as a circular hole, while the lid is formed as a circular disk.

According to the preferred embodiment of the present invention, the water reservoir includes an inclined side wall, wherein the diameter of said water reservoir increases from the bottom to the top, and wherein preferably the lid is supported directly or indirectly by the inclined side wall of the water reservoir. This structure allows an easy access for the user in order to clean the water reservoir. The inclined side wall allows the supporting of the lid by low complexity.

Advantageously, the lid frame is supported by the inclined side wall of the water reservoir and, in turn, the lid is supported by the lid frame.

For example, the lid frame is glued to the outer portion of the bottom side of the lid. The lid frame also prevents leakage of steam from the edge of the lid.

Further, the lid may include at least one access opening, in particular two access openings, so that the lid is manually removable from the recess, wherein preferably at least one hole is formed beneath said access opening, so that condensed water is drainable into the water reservoir.

Moreover, the cooking hob may comprise a maximum water level sensor for detecting an allowed maximum level of the water in the water reservoir and a minimum water level sensor for detecting an allowed minimum level of the water in the water reservoir. The one or more water level sensors allow an automatic or assisted-manual steam cooking process.

In particular, for an automatic control of a steam cooking process, the water tap is automatically controllable or controlled by a control unit of the cooking hob. The water tap allows the automatic steam cooking process.

For example, the at least one heating element is an induction heating element and/or a tubular heating element.

According to a further embodiment of the present invention, the lid is formed as a conical or concave disk, wherein the vertex points downwards, and wherein preferably a central recess is formed in said lid. In this case, the lid and the glass ceramic panel form the smooth and partially conical or concave surface, wherein the conical or concave part is arranged within the lid. The conical or concave lid allows collecting of pouring water, condensed water and food juices. The optional central recess is provided for refilling water in case of manual pouring.

The present invention relates further to a method for controlling a steam cooking process performed by a cooking hob with at least one steam generator, wherein said method comprises the steps of:
a) starting the steam cooking process,
b) detecting the level of water in a water reservoir of the steam generator,
c) refilling the water reservoir, if the water level is lower than the minimum level of the water,
d) detecting the temperature of the water in the water reservoir and comparing said temperature with at least one set temperature value,
e) activating a heating element of the steam generator at a high power, if the temperature of the water in the water reservoir is below the set temperature value,
f) deactivating the heating element, if the temperature of the water in the water reservoir is above the set temperature value, and
g) outputting an overheat signal, if the temperature of the water in the water reservoir is above the set temperature value,
and wherein preferably the steps b) and d) are continuously repeated and, if necessary, the steps c), e), f) and/or g), respectively, are subsequently executed, and wherein the method is performed or performable by a cooking hob with at least one steam generator mentioned above.

Preferably, the detected temperature of the water in the water reservoir is compared with a lower set temperature value and an upper set temperature value, wherein the heating element is activated at high power, if the temperature of the water in the water reservoir is below the lower set temperature value, or the heating element is deactivated, if the temperature of the water in the water reservoir is above the upper set temperature value, or the heating element is activated in a simmer mode, if the temperature of the water in the water reservoir is between the lower set temperature value and the upper set temperature value.

Furthermore, the refilling of the water reservoir in step c) is performed automatically by opening and closing at least one water tap interconnected between the water reservoir and a water supply. Alternatively, the refilling of the water reservoir in step c) is performed manually by the user after a refill signal has been output. In the first case, the steam cooking process may be performed without any intervention of the user. In the latter case, the steam cooking process may be performed by a cooking hob with low complexity.

Novel and inventive features of the present invention are set forth in the appended claims.

The present invention will be described in further detail with reference to the drawings, in which
- FIG 1: illustrates a schematic sectional partial side view of a cooking hob with a steam generator according to a preferred embodiment of the present invention,
- FIG 2: illustrates a schematic exploded sectional partial side view of the cooking hob with the steam generator according to the preferred embodiment of the present invention,
- FIG 3: illustrates a schematic exploded partial perspective view of the cooking hob with the steam generator according to the preferred embodiment of the present invention,
- FIG 4: illustrates a schematic partial perspective view of the cooking hob with the steam generator according to the preferred embodiment of the present invention,
- FIG 5: illustrates a schematic perspective view of a lid for the cooking hob with the steam generator according to the preferred embodiment of the present invention,
- FIG 6: illustrates a schematic perspective view of the cooking hob with the steam generator according to the preferred embodiment of the present invention,
- FIG 7: illustrates a schematic flow chart diagram of a method for controlling an automatic steam cooking process by the cooking hob with the steam generator according to the preferred embodiment of the present invention,
- FIG 8: illustrates a schematic flow chart diagram of a method for controlling an assisted-manual steam cooking process by the cooking hob with the steam generator according to the preferred embodiment of the present invention,
- FIG 9: illustrates a schematic sectional partial side view of the cooking hob with the steam generator according to a further embodiment of the present invention, and
- FIG 10: illustrates a schematic sectional side view of the lid according to the further embodiment of the present invention.

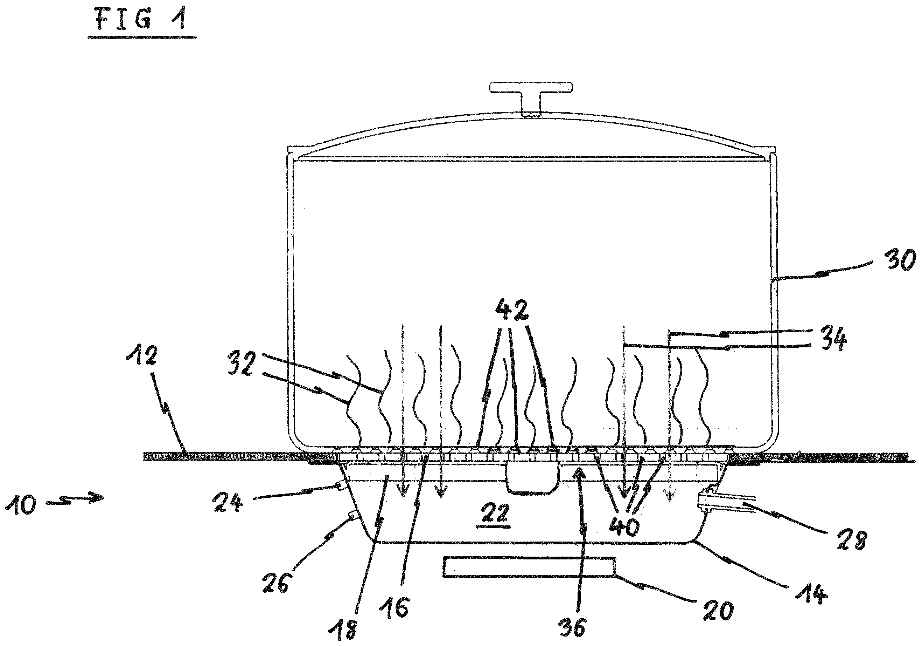

FIG 1 illustrates a schematic sectional partial side view of a cooking hob 10 with a steam generator according to a preferred embodiment of the present invention. In FIG 1 a standard steam cooking pot 30 is placed upon said cooking hob 10.

The cooking hob 10 comprises a glass ceramic panel 12 and a water reservoir 14. The glass ceramic panel 12 includes a recess 36. In this example, the recess 36 is formed as a circular hole.

The recess 36 is closed by a removable lid 16. The upper surfaces of the glass ceramic panel 12 and the lid 16 are at the same level. Thus, the glass ceramic panel 12 and the lid 16 form a smooth surface. The water reservoir 14 is arranged beneath the lid 16 and the recess 36. The water reservoir 14 is fastened at the bottom side of the glass ceramic panel 12. In this example, a border or flange of the water reservoir 14 is glued at a bottom side of the glass ceramic panel 12, wherein said border or flange encloses an open top side of the water reservoir 14. The water reservoir 14 according to the preferred embodiment includes a flat bottom wall formed as a circular disk and an inclined side wall enclosing said bottom wall, wherein the diameter of the water reservoir 14 increases from the bottom to the top. Preferably, the water reservoir 14 is formed as a single-piece part.

Further, the cooking hob 10 comprises a heating element 20 arranged beneath the water reservoir 14. For example, the heating element 20 may be an inductive or tubular heating element. The water reservoir 14 is filled or fillable with water 22. In this example, the water reservoir 14 includes a maximum water level sensor 24 and a minimum water level sensor 26. Optionally, the water reservoir 14 includes a water tap 28. In this example, the maximum water level sensor 24, the minimum water level sensor 26 and the water tap 28 are attached at the side wall of the water reservoir 14. The maximum water level sensor 24 is provided for detecting an allowed maximum level of the water 22 inside the water reservoir 14. In a similar way, the minimum water level sensor 26 is provided for detecting an allowed minimum level of the water 22 inside the water reservoir 14. The water tap 28 is connectable or connected to a water supply. The water tap 28 is provided for refilling the water reservoir 14 with water 22. Preferably, the water reservoir 14 is automatically refilled or refillable, wherein the water tap 28 is controlled by a control unit of the cooking hob 10. Moreover, the cooking hob 10 comprises a temperature sensor, which is not shown in the drawings. For example, said temperature sensor is arranged in or at the water reservoir 14.

The lid 16 includes a plurality of lid holes 36. A bottom of the steam cooking pot 30 includes a plurality of pot holes 42. When the steam cooking pot 30 is arranged upon the lid 16, then the lid holes 36 and the pot holes 42 overlap at least partially, so that the inner spaces of the steam cooking pot 30 and the water reservoir 14 are connected to each other.

When the water reservoir 14 is filled with water 22 and the heating element 20 is activated, then the water 22 boils and steam 32 is generated within said water reservoir 14. Then, the steam 32 escapes through the lid holes 36 and infiltrates through the pot holes 42 into the steam cooking pot 30. A food stuff placed in the steam cooking pot 30 is treated by the steam 32. Condensed water 34 formed inside the steam cooking pot 30 can flow back through the pot holes 42 and the lid holes 36 into the water reservoir 14 again.

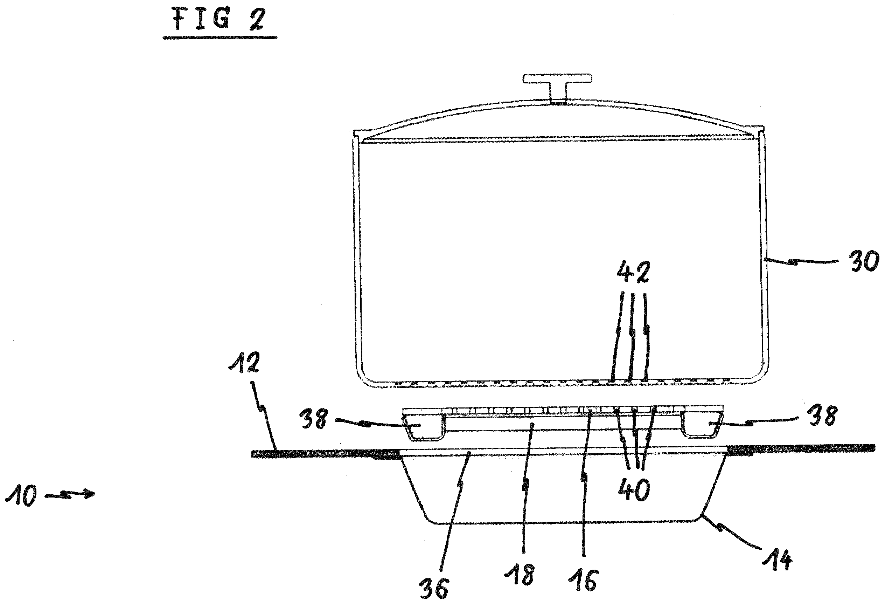

FIG 2 illustrates a schematic exploded sectional partial side view of the cooking hob 10 with the steam generator according to the preferred embodiment of the present invention. The plurality of pot holes 42 is formed in the bottom of the steam cooking pot 30. The plurality of lid holes 36 is formed in the lid 16.

Further, the lid 16 comprises a lid frame 18 attached at the outer portion of the bottom side of said lid 16. The shape of the lid frame 18 is adapted to the inclined side wall of the water reservoir 14, so that the upper surfaces of the glass ceramic panel 12 and the lid 16 are at the same level, when the lid 16 is inserted in the recess 36. The inclined side wall of the water reservoir 14 supports the lid frame 18. In turn, the lid frame 18 supports the lid 16. For example, the lid frame 18 is made of a polymeric material. Preferably, the lid frame 18 is glued to the lid 16.

Moreover, the lid 16 includes two access openings 38 arranged at opposite outer portions of said lid 16. The access openings 38 allow the user to remove easily the lid 16 from the recess 36. Optionally, at least one hole may be formed below one or both access openings 38, so that the condensed water 34 can flow back from the steam cooking pot 30 into the water reservoir 14 again. The border or flange of the water reservoir 14 is glued at the bottom side of the glass ceramic panel 12, wherein said border or flange encloses the open top side of the water reservoir 14.

Preferably, the water reservoir 14 is made of stainless steel. The shape and the material of the water reservoir 14 allow an easy cleaning of said water reservoir 14 by the user. The removable lid 16 allows an easy access to the water reservoir 14 for the user in order to clean said water reservoir 14.

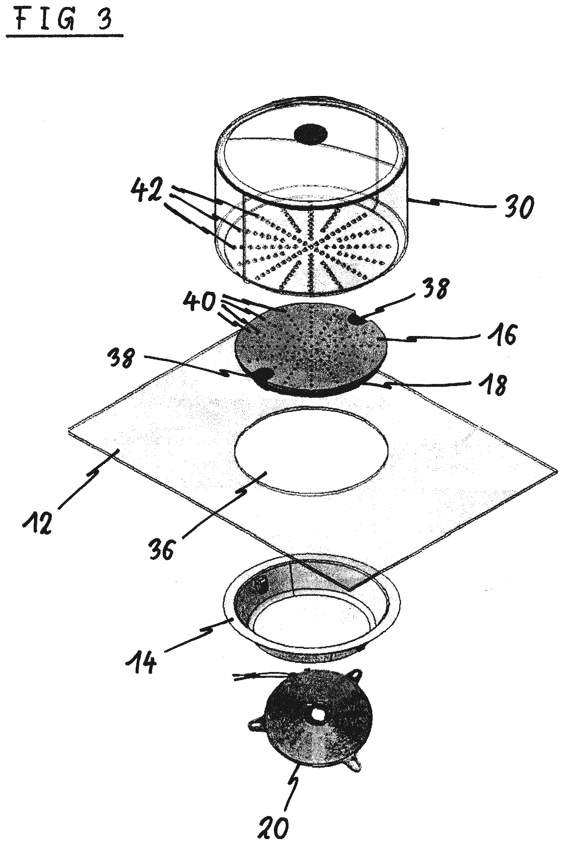

FIG 3 illustrates a schematic exploded partial perspective view of the cooking hob 10 with the steam generator according to the preferred embodiment of the present invention.

The glass ceramic panel 12 includes the recess 36 formed as circular hole. The recess 36 is closed or closable by the removable lid 16. The lid 16 is formed as a circular disk. The diameter of the lid 16 is marginally smaller than the diameter of the recess 36. The water reservoir 14 is arranged beneath the lid 16 and the recess 36. The water reservoir 14 is fastened at the bottom side of the glass ceramic panel 12. In this example, the border or flange of the water reservoir 14 is glued at the bottom side of the glass ceramic panel 12, wherein said border or flange encloses the open top side of the water reservoir 14. The water reservoir 14 according to the preferred embodiment includes the flat bottom wall formed as circular disk and the inclined side wall enclosing said bottom wall, wherein the diameter of the water reservoir 14 increases from the bottom to the top. In this example, the water reservoir 14 is formed as a single-piece part. The heating element 20 is arranged beneath the water reservoir 14. For example, the heating element 20 may be an inductive or tubular heating element. The steam cooking pot 30 is arrangeable upon the lid 16, so that the lid holes 36 and the pot holes 42 overlap at least partially. By this way, the inner spaces of the steam cooking pot 30 and the water reservoir 14 are connected to each other.

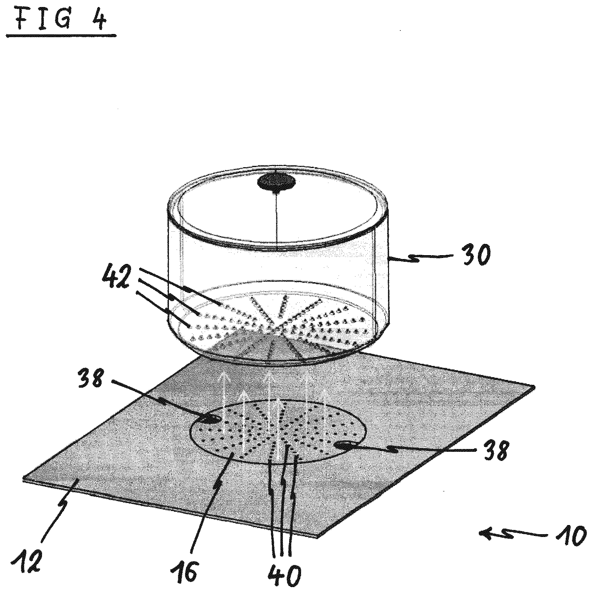

FIG 4 illustrates a schematic partial perspective view of the cooking hob 10 with the steam generator according to the preferred embodiment of the present invention. Preferably, the lid 16 is made of ceramic glass. Thus, the lid 16 may have the same design as the glass ceramic panel 12. The upper surfaces of the glass ceramic panel 12 and the lid 16 are at the same level, so that the glass ceramic panel 12 and the lid 16 may form a smooth surface.

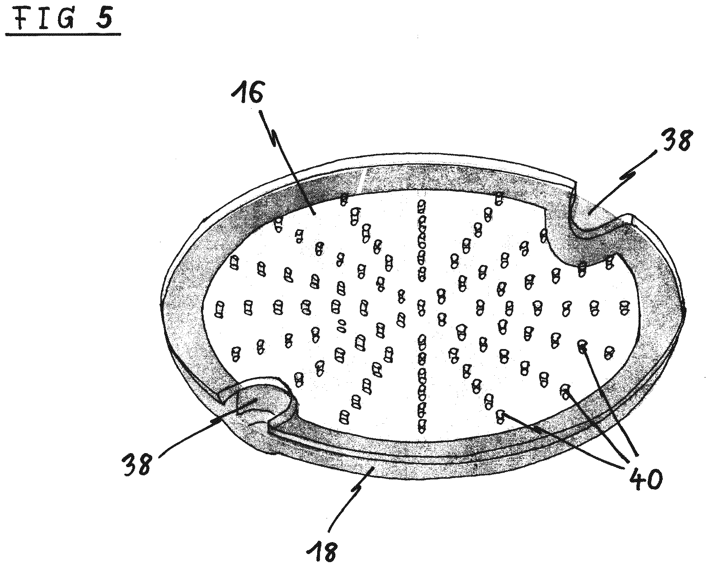

FIG 5 illustrates a schematic perspective view of the lid 16 for the cooking hob 10 with the steam generator according to the preferred embodiment of the present invention. In particular, the lid 16 is made of ceramic glass, while the lid frame 18 is made of polymeric material. Preferably, the lid frame 18 is glued to the lid 16. The access openings 38 allow the user to remove easily the lid 16 from the recess 36. The optional hole or holes formed below one or both access openings 38 allow or contribute that the condensed water 34 can flow back from the steam cooking pot 30 into the water reservoir 14 again.

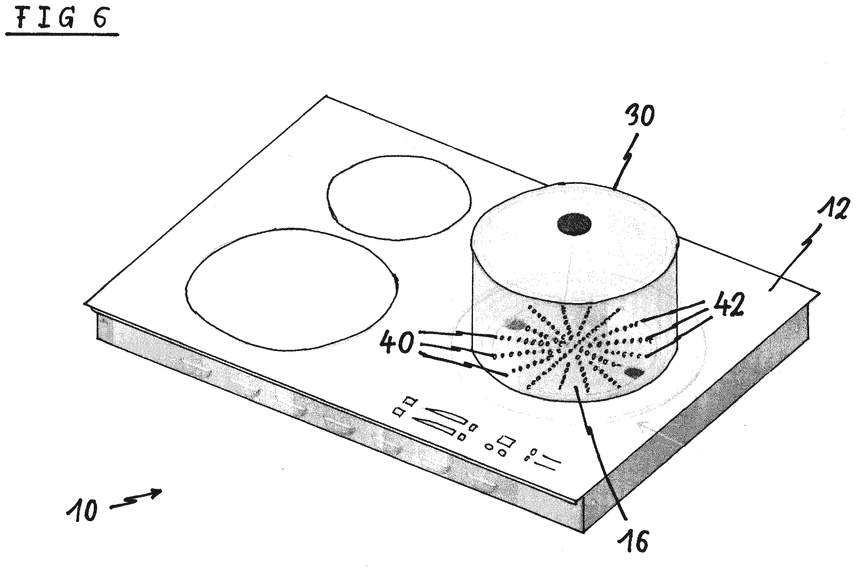

FIG 6 illustrates a schematic perspective view of the cooking hob 10 with the steam generator according to the preferred embodiment of the present invention. In this example, the cooking hob 10 comprises three cooking zones. A steam cooking zone is arranged on the right hand side, while two further cooking zones are arranged on the left hand side. In particular, said further cooking zones are induction, radiant and/or gas cooking zones.

Alternatively, the cooking hob 10 may be a single module with one cooking zone and one steam generator beneath said cooking zone. The cooking hob 10 with the steam cooking zone and optional further cooking zones may be integrated within a cooktop or formed as a free standing cooking hob. The steam cooking zone can be integrated also with free standing steam cookers.

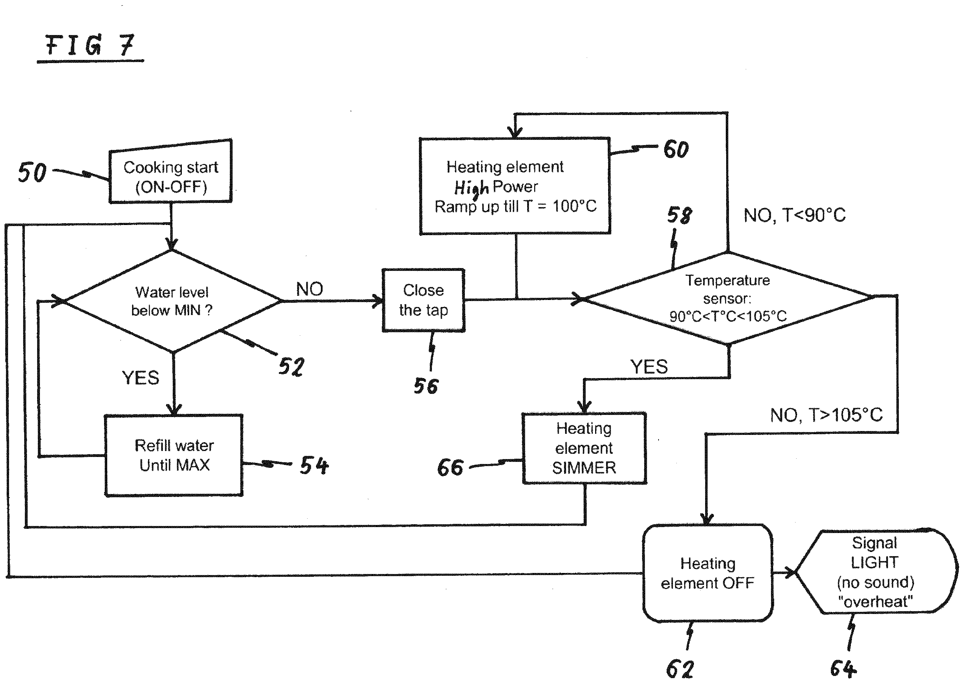

FIG 7 illustrates a schematic flow chart diagram of a method for controlling an automatic steam cooking process by the cooking hob 10 with the steam generator according to the preferred embodiment of the present invention. In particular, the method is provided for the cooking hob 10 with the steam generator mentioned above.

In a first step 50 the steam cooking process is started by operating a switch, e.g. an on-off switch. In a second step 52 the water level in the water reservoir 14 is detected by the minimum water level sensor 26. If the water level is below the allowed minimum level, then in a step 54 the water 22 is automatically refilled into the water reservoir 14, until it reaches the maximum water level sensor 24. Then, again in step 52 the water level in the water reservoir 14 is detected by the minimum water level sensor 26 a further time. If the water level is above the allowed minimum level, then in a step 56 the water tap 28 is closed.

In a next step 58 the temperature T of the water 22 in the water reservoir 14 is detected and compared with a lower set temperature value and an upper set temperature value. Ideally, for the steam cooking process the temperature T of the water 22 should be between the lower set temperature value and the upper set temperature value. In this example, the lower set temperature value is 90°C, while the upper set temperature value is 105°C. Preferably, the lower set temperature value is between 85°C and 95°C, while the upper set temperature value is between 100°C and 110°C.

If the temperature T of the water 22 in the water reservoir 14 is below the lower set temperature value, then in a step 60 the heating element is activated at high power. If the temperature T of the water 22 in the water reservoir 14 is above the upper set temperature value, then in a step 62 the heating element is deactivated and in a subsequent step 64 an overheat signal is output. In this example, the overheat signal is an optical signal indicated by a light source. If the temperature T of the water 22 in the water reservoir 14 is between the lower set temperature value and the upper set temperature value, then in a step 66 the heating element is activated in a simmer mode.

During the steam cooking process the step 52 of detecting the level of the water 22 in the water reservoir 14 and the step 58 of detecting and comparing the temperature T of the water 22 in the water reservoir 14 are continuously repeated, so that the water reservoir 14 can be automatically refilled, if necessary. The method shown in FIG 7 allows an automatic control of the steam cooking process by the cooking hob 10 with the steam generator.

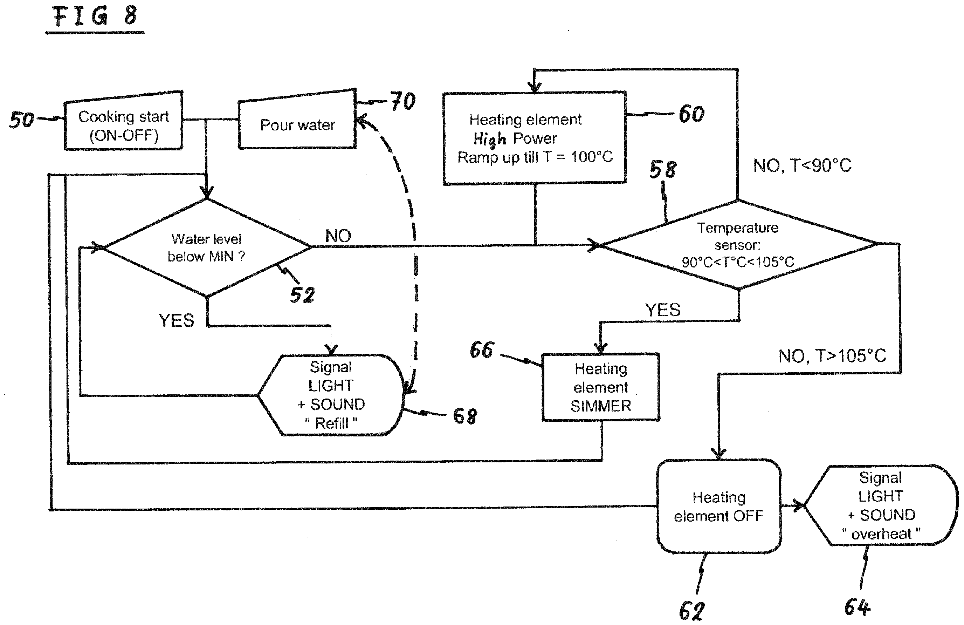

FIG 8 illustrates a schematic flow chart diagram of a method for controlling an assisted-manual steam cooking process by the cooking hob 10 with the steam generator according to the preferred embodiment of the present invention.

In the first step 50 the steam cooking process is started by operating the designated switch, e.g. the on-off switch. In the next step 52 the water level in the water reservoir 14 is detected by the minimum water level sensor 26. If the water level is below the allowed minimum level, then a refill signal is output in a step 68. In this example, the refill signal is an optical and acoustic signal. In a subsequent step 70 the water reservoir 14 is manually refilled or refillable with water 22 by the user. Then, again in step 52 the level of the water 22 in the water reservoir 14 is detected by the minimum water level sensor 26 a further time. If the level of the water 22 is still below the allowed minimum level, then in step 68 the refill signal is output again or still, and the user has to refill manually the water reservoir 14 with water 22 in step 70. If the level of the water 22 is above the allowed minimum level, then the step 58 of detecting and comparing the temperature T of the water 22 in the water reservoir 15 is activated.

In the step 58 it is compared, if the detected temperature T of the water 22 in the water reservoir 14 is between the lower set temperature value and the upper set temperature value. Also in this example, the lower set temperature value is 90°C, while the upper set temperature value is 105°C. Preferably, the lower set temperature value is between 85°C and 95°C, while the upper set temperature value is between 100°C and 110°C.

If the temperature T of the water 22 in the water reservoir 14 is below the lower set temperature value, then in step 60 the heating element is activated at high power. If the temperature T of the water 22 in the water reservoir 14 is above the upper set temperature value, then in step 62 the heating element is deactivated and in the subsequent step 64 the overheat signal is output. In this example, the overheat signal is an optical signal and an acoustic signal. If the temperature T of the water 22 in the water reservoir 14 is between the lower set temperature value and the upper set temperature value, then in the step 66 the heating element is activated in the simmer mode.

During the steam cooking process the step 52 of detecting the water level in the water reservoir 14 and the step 58 of detecting and comparing the temperature T of the water 22 in the water reservoir 14 are continuously repeated. The method shown in FIG 8 allows an assisted-manual control of the steam cooking process by the cooking hob 10 with the steam generator. Only the refilling of water 22 into the water reservoir 14 has to be manually performed by the user. The assisted-manual control of the steam cooking process does not require the water tap 28 and its connection to the water supply. Thus, the assisted-manual control of the steam cooking process can be performed by the cooking hob 10 with the steam generator with low complexity.

In the case of the assisted-manual control of the steam cooking process the minimum water level sensor 26 at the water reservoir 14 may be optional, while the empty water reservoir 14 is detected by the temperature sensor, so that an "overheat" signal becomes a "refill" signal.

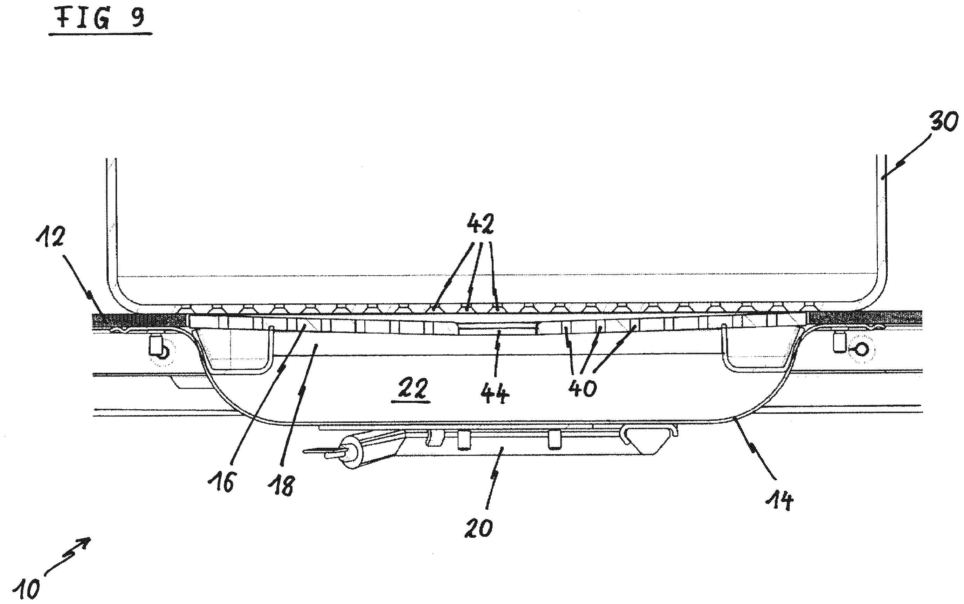

FIG 9 illustrates a schematic sectional partial side view of the cooking hob 10 with the steam generator according to a further embodiment of the present invention. In FIG 9 the standard steam cooking pot 30 is placed upon said cooking hob 10.

The cooking hob 10 comprises the glass ceramic panel 12 and the water reservoir 14. The glass ceramic panel 12 includes the recess 36 formed as the circular hole. The recess 36 is closed by the removable lid 16. The water reservoir 14 is arranged beneath the lid 16 and the recess 36. The water reservoir 14 according to the further embodiment also includes the flat bottom wall formed as the circular disk and the inclined side wall enclosing said bottom wall, wherein the diameter of the water reservoir 14 increases from the bottom to the top. Preferably, the water reservoir 14 is formed as a single-piece part. Further, the cooking hob 10 comprises a heating element 20 arranged beneath the water reservoir 14. For example, the heating element 20 may be an inductive or tubular heating element. The water reservoir 14 is filled or fillable with water 22.

The cooking hob 10 according to the further embodiment differs from the cooking hob 10 of the preferred embodiment mentioned above in that the lid 16 is formed as a conical disk, wherein the vertex points downwards. The conical lid 16 allows collecting of pouring water, condensed water and food juices. In this case, the lid 16 and the glass ceramic panel 12 form a smooth and partially conical surface, wherein the conical part is arranged within the lid 16.

Additionally, a central recess 44 is formed in the lid 14. The central recess 44 is provided for refilling water in case of manual pouring. The upper surfaces of the glass ceramic panel 12 and the border of the lid 16 are at the same level.

The lid 16 includes the plurality of lid holes 36. A bottom of the steam cooking pot 30 includes the plurality of pot holes 42. When the steam cooking pot 30 is arranged upon the lid 16, then a hollow is formed between said lid 16 and the bottom of said steam cooking pot 30. Thus, the lid holes 36 and the pot holes 42 form certainly passages from the water reservoir 14 to the inner space of the steam cooking pot 30.

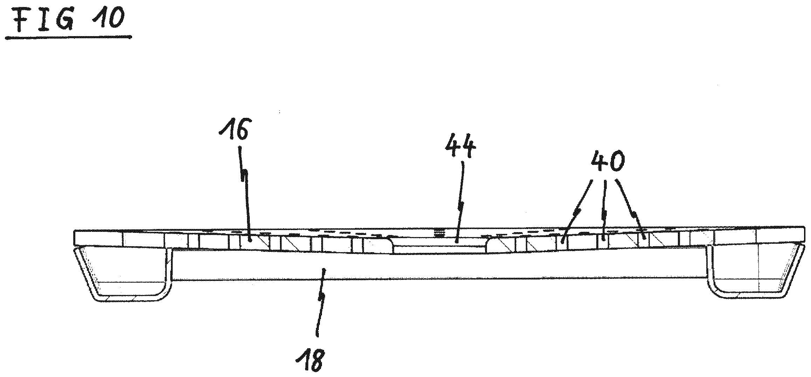

FIG 10 illustrates a schematic sectional side view of the lid 16 according to the further embodiment of the present invention. The lid 16 is formed as conical disk, wherein the vertex points downwards. The central recess 44 is formed around the vertex of the lid 14. The lid 16 includes the plurality of lid holes 36.

Further, the lid 16 comprises the lid frame 18 attached at the outer portion of the bottom side of said lid 16. The shape of the lid frame 18 is adapted to the inclined side wall of the water reservoir 14, so that the upper surfaces of the glass ceramic panel 12 and the border of the lid 16 are at the same level, when the lid 16 is inserted in the recess 36. The inclined side wall of the water reservoir 14 supports the lid frame 18. In turn, the lid frame 18 supports the lid 16. For example, the lid frame 18 is made of polymeric material and is glued to the lid 16.

Additionally, the lid 16 includes the two access openings 38 arranged at the opposite outer portions of said lid 16. The access openings 38 allow the user to remove easily the lid 16 from the recess 36. Optionally, at least one hole may be formed below one or both access openings 38, so that the condensed water 34 can flow back from the steam cooking pot 30 into the water reservoir 14 again.

The cooking hob with the integrated steam generator according to the present invention allows the use of the standard steam cooking pot 30 or a bamboo steamer. The arrangement of the lid 16 in the recess 36 of the glass ceramic panel results in the smooth surface on the cooking hob 10. Said smooth surface allows the compatibility with every kind of steam cooking pots and bamboo steamers. The steam 32 is directly injected into the steam cooking pot 30 or bamboo steamer, respectively. The steam 32 may be injected in less than one minute, in particular, if the heating element is an induction or tubular heating element. For example, the cooking hob with the steam generator may be integrated in a multi surface cooktop.

### List of reference numerals

- 10: cooking hob
- 12: glass ceramic panel
- 14: water reservoir
- 16: lid
- 18: lid frame
- 20: heating element
- 22: water
- 24: maximum water level sensor
- 26: minimum water level sensor
- 28: water tap
- 30: steam cooking pot
- 32: steam
- 34: condensed water
- 36: recess
- 38: access opening
- 40: lid hole
- 42: pot hole
- 44: central recess
- 50: step of starting the steam cooking process
- 52: step of detecting the water level
- 54: step of refilling the water reservoir 14
- 56: step of closing the water tap 28
- 58: step of detecting and comparing the temperature T
- 60: step of activating the heating element at high power
- 62: step of deactivating the heating element 20
- 64: step of outputting an overheat signal
- 66: step of activating the heating element in simmer mode
- 68: step of outputting a refill signal
- 70: step of manual refilling water

- T: temperature of the water 22

## Claims

1. A cooking hob (10) with at least one steam generator, wherein:
- the cooking hob (10) comprises a glass ceramic panel (12) including at least one recess (36),
- the cooking hob (10) comprises at least one water reservoir (14) arranged beneath the recess (36),
- the cooking hob (10) comprises at least one removable lid (16) for closing the recess (36),
- the cooking hob (10) comprises at least one heating element (20) arranged beneath, besides and/or inside the water reservoir (14), and
- the lid (16) is arranged or arrangeable in the recess (36) of the glass ceramic panel (12), so that the upper surfaces of the lid (16) and the glass ceramic panel (12) are at the same level and form either a smooth or a smooth and partially concave surface,
**characterised in that**
the lid (16) includes a plurality of lid holes (40) permeable for steam (32), wherein the lid (16) and/or a portion of the glass ceramic panel (12) encircling said lid (16) are provided for supporting a standard steam cooking pot (30) or a bamboo steamer, so that steam (32) is directed from the water reservoir (14) through the lid holes (40) into the steam cooking pot (30) or the bamboo steamer, respectively, and wherein the lid (16) comprises a lid frame (18) attached at an outer portion of the bottom side of said lid (16) and made of at least one polymeric material, and wherein the cooking hob (10) comprises at least one water level sensor (24, 26) arranged at or in the water reservoir (14), and wherein the cooking hob (10) comprises a water tap (28) connected to the water reservoir (14) on the one hand and connectable or connected to a water supply on the other hand, and wherein the cooking hob (10) comprises at least one temperature sensor arranged at or in the water reservoir (14) and provided for detecting the temperature (T) of the water (22) in the water reservoir (14).

2. The cooking hob according to claim 1,
**characterised in that**
the lid (16) is made of ceramic glass, wherein preferably the lid (16) is made of the same material as the glass ceramic panel (12).

3. The cooking hob according to claim 1 or 2,
**characterised in that**
the size of the lid (16) is marginally smaller than the size of the recess (36) in the glass ceramic panel (12), wherein preferably the recess (36) is formed as a circular hole, while the lid (16) is formed as a circular disk.

4. The cooking hob according to any one of the preceding claims,
**characterised in that**
the water reservoir (14) includes an inclined side wall, wherein the diameter of said water reservoir (14) increases from the bottom to the top, and wherein preferably the lid (16) is supported directly or indirectly by the inclined side wall of the water reservoir (14).

5. The cooking hob according to any one of the preceding claims,
**characterised in that**
the lid frame (18) is supported by the inclined side wall of the water reservoir (14) and, in turn, the lid (16) is supported by the lid frame (18).

6. The cooking hob according to any one of the preceding claims,
**characterised in that**
the lid frame (18) is glued to the outer portion of the bottom side of the lid (16).

7. The cooking hob according to any one of the preceding claims,
**characterised in that**
the lid (16) includes at least one access opening (38), in particular two access openings (38), so that the lid (16) is manually removable from the recess (36), wherein preferably at least one hole is formed beneath said access opening (38), so that condensed water (34) is drainable into the water reservoir (14).

8. The cooking hob according to any one of the preceding claims,
**characterised in that**
the cooking hob (10) comprises a maximum water level sensor (24) for detecting an allowed maximum level of the water (22) in the water reservoir (14) and a minimum water level sensor (26) for detecting an allowed minimum level of the water (22) in the water reservoir (14).

9. The cooking hob according to any one of the preceding claims,
**characterised in that**
the water tap (28) is automatically controllable or controlled by a control unit of the cooking hob (10).

10. The cooking hob according to any one of the preceding claims,
**characterised in that**
the at least one heating element (20) is an induction heating element and/or a tubular heating element.

11. The cooking hob according to any one of the preceding claims,
**characterised in that**
the lid (16) is formed as a conical or concave disk, wherein the vertex points downwards, and wherein preferably a central recess (44) is formed in said lid (16).

12. A method for controlling a steam cooking process performed by a cooking hob (10) with at least one steam generator, wherein said method comprises the steps of:
a) starting (50) the steam cooking process,
b) detecting (52) the level of water (22) in a water reservoir (14) of the steam generator,
c) refilling (54) the water reservoir (14), if the water level is lower than the minimum level of the water (22),
d) detecting (52) the temperature (T) of the water (22) in the water reservoir (14) and comparing (52) said temperature (T) with at least one set temperature value,
e) activating (60) a heating element (20) of the steam generator at a high power, if the temperature (T) of the water (22) in the water reservoir (14) is below the set temperature value,
f) deactivating (62) the heating element (20), if the temperature (T) of the water (22) in the water reservoir (14) is above the set temperature value, and
g) outputting (64) an overheat signal, if the temperature (T) of the water (22) in the water reservoir (14) is above the set temperature value,
and wherein preferably the steps b) and d) are continuously repeated and, if necessary, the steps c), e), f) and/or g), respectively, are subsequently executed,
**characterised in that**
the method is performed or performable by a cooking hob (10) with at least one steam generator according to any one of the claims 1 to 11.

13. The method according to claim 12,
**characterised in that**
the detected temperature (T) of the water (22) in the water reservoir (14) is compared with a lower set temperature value and an upper set temperature value, wherein the heating element (20) is activated (60) at high power, if the temperature (T) of the water (22) in the water reservoir (14) is below the lower set temperature value, or the heating element (20) is deactivated (62), if the temperature (T) of the water (22) in the water reservoir (14) is above the upper set temperature value, or the heating element (20) is activated (66) in a simmer mode, if the temperature (T) of the water (22) in the water reservoir (14) is between the lower set temperature value and the upper set temperature value.

14. The method according to claim 12 or 13,
**characterised in that**
the refilling (54) of the water reservoir (14) in step c) is performed automatically by opening and closing (56) at least one water tap (28) interconnected between the water reservoir (14) and a water supply, or the refilling (70) of the water reservoir (14) in step c) is performed manually by the user after a refill signal has been output (68).

## Patentansprüche

1. Kochfeld (10) mit zumindest einem Dampferzeuger, wobei
- das Kochfeld (10) eine Glaskeramikplatte (12) mit zumindest einer Aussparung (36) umfasst,
- das Kochfeld (10) zumindest ein Wasserreservoir (14) umfasst, das unterhalb der Aussparung (36) angeordnet ist,
- das Kochfeld (10) zumindest einen entfernbaren Deckel (16) zum Verschließen der Aussparung (36) umfasst,
- das Kochfeld (10) zumindest ein Heizelement (20) umfasst, das unter, neben und/oder in dem Wasserreservoir (14) angeordnet ist, und
- der Deckel (16) in der Aussparung (36) der Glaskeramikplatte (12) angeordnet ist oder angeordnet werden kann, so dass die Oberflächen des Deckels (16) und der Glaskeramikplatte (12) auf derselben Höhe liegen und entweder eine glatte oder eine glatte und teilweise konkave Oberfläche bilden,
**dadurch gekennzeichnet, dass**
der Deckel (16) eine Mehrzahl von Deckellöchern (40) aufweist, die für Dampf (32) durchlässig sind, wobei der Deckel (16) und/oder ein Abschnitt der den Deckel (16) umgebenden Glaskeramikplatte (12) zur Unterstützung eines Standarddampfkochtopfes (30) oder eines Bambusdämpfers bereitgestellt sind, so dass Dampf (32) aus dem Wasserreservoir (14) durch die Deckellöcher (40) in den Dampfkochtopf (30) oder den Bambusdämpfer geleitet wird, und wobei der Deckel (16) einen Deckelrahmen (18) umfasst, der an einem Außenabschnitt der Unterseite des Deckels (16) befestigt ist und aus zumindest einem Polymermaterial gefertigt ist, und wobei das Kochfeld (10) zumindest einen Wasserstandssensor (24, 26) umfasst, der an oder in dem Wasserreservoir (14) angeordnet ist, und wobei das Kochfeld (10) einen Wasserhahn (28) umfasst, der einerseits mit dem Wasserreservoir (14) verbunden ist und andererseits mit einer Wasserzufuhr verbindbar oder verbunden ist, und wobei das Kochfeld (10) zumindest einen Temperatursensor umfasst, der an oder in dem Wasserreservoir (14) angeordnet ist und zum Nachweis der Temperatur (T) des Wassers (22) im Wasserreservoir (14) bereitgestellt ist.

2. Kochfeld nach Anspruch 1,
**dadurch gekennzeichnet, dass**
der Deckel (16) aus Keramikglas gefertigt ist, wobei der Deckel (16) vorzugsweise aus demselben Material gefertigt ist wie die Glaskeramikplatte (12).

3. Kochfeld nach Anspruch 1 oder 2,
**dadurch gekennzeichnet, dass**
die Größe des Deckels (16) etwas kleiner als die Größe der Aussparung (36) in der Glaskeramikplatte (12) ist, wobei die Aussparung (36) vorzugsweise als kreisförmiges Loch ausgebildet ist, während der Deckel (16) als kreisförmige Scheibe ausgebildet ist.

4. Kochfeld nach einem der vorhergehenden Ansprüche, **dadurch gekennzeichnet, dass**
das Wasserreservoir (14) eine geneigte Seitenwand aufweist, wobei der Durchmesser des Wasserreservoirs (14) von unten nach oben zunimmt, und wobei vorzugsweise der Deckel (16) direkt oder indirekt von der geneigten Seitenwand des Wasserreservoirs (14) unterstützt wird.

5. Kochfeld nach einem der vorhergehenden Ansprüche,
**dadurch gekennzeichnet, dass**
der Deckelrahmen (18) von der geneigten Seitenwand des Wasserreservoirs (14) unterstützt wird und der Deckel (16) wiederum vom Deckelrahmen (18) unterstützt wird.

6. Kochfeld nach einem der vorhergehenden Ansprüche,
**dadurch gekennzeichnet, dass**
der Deckelrahmen (18) am Außenabschnitt der Unterseite des Deckels (16) festgeklebt ist.

7. Kochfeld nach einem der vorhergehenden Ansprüche,
**dadurch gekennzeichnet, dass**
der Deckel (16) zumindest eine Zugangsöffnung (38) aufweist, insbesondere zwei Zugangsöffnungen (38), so dass der Deckel (16) manuell von der Aussparung (36) entfernbar ist, wobei vorzugsweise zumindest ein Loch unterhalb der Zugangsöffnung (38) ausgebildet ist, so dass kondensiertes Wasser (34) in das Wasserreservoir (14) abgelassen werden kann.

8. Kochfeld nach einem der vorhergehenden Ansprüche,
**dadurch gekennzeichnet, dass**
das Kochfeld (10) einen Höchstwasserstandssensor (24) zum Nachweisen eines zulässigen Höchstpegels des Wassers (22) im Wasserreservoir (14) und einen Mindestwasserstandssensor (26) zum Nachweisen eines zulässigen Mindestpegels des Wassers (22) im Wasserreservoir (14) umfasst.

9. Kochfeld nach einem der vorhergehenden Ansprüche,
**dadurch gekennzeichnet, dass**
der Wasserhahn (28) durch eine Steuereinheit des Kochfelds (10) automatisch steuerbar ist oder gesteuert wird.

10. Kochfeld nach einem der vorhergehenden Ansprüche,
**dadurch gekennzeichnet, dass**
das zumindest eine Heizelement (20) ein Induktionsheizelement und/oder ein röhrenförmiges Heizelement ist.

11. Kochfeld nach einem der vorhergehenden Ansprüche,
**dadurch gekennzeichnet, dass**
der Deckel (16) als eine konische oder konkave Scheibe ausgebildet ist, wobei die Spitze nach unten zeigt, und wobei vorzugsweise eine mittige Aussparung (44) im Deckel (16) ausgebildet ist.

12. Verfahren zum Steuern eines Dampfgarverfahrens, das von einem Kochfeld (10) durchgeführt wird, mit zumindest einem Dampferzeuger, wobei das Verfahren die folgenden Schritte umfasst:
a) Starten (50) des Dampfgarverfahrens,
b) Nachweisen (52) des Pegels des Wassers (22) in einem Wasserreservoir (14) des Dampferzeugers,
c) Auffüllen (54) des Wasserreservoirs (14), wenn der Wasserpegel niedriger als der Mindestpegel des Wassers (22) ist,
d) Nachweisen (52) der Temperatur (T) des Wassers (22) im Wasserreservoir (14) und Vergleichen (52) der Temperatur (T) mit zumindest einem eingestellten Temperaturwert,
e) Aktivieren (60) eines Heizelements (20) des Dampferzeugers mit höherer Energie, wenn die Temperatur (T) des Wassers (22) im Wasserreservoir (14) unter dem eingestellten Temperaturwert liegt,
f) Deaktivieren (62) des Heizelements (20), wenn die Temperatur (T) des Wassers (22) im Wasserreservoir (14) über dem eingestellten Temperaturwert liegt, und
g) Ausgeben (64) eines Überhitzungssignals, wenn die Temperatur (T) des Wassers (22) im Wasserreservoir (14) über dem eingestellten Temperaturwert liegt,
und wobei vorzugsweise die Schritte b) und d) kontinuierlich wiederholt werden, und wenn notwendig die Schritte c), e), f) und/oder g) anschließend ausgeführt werden,
**dadurch gekennzeichnet, dass**
das Verfahren von einem Kochfeld (10) mit zumindest einem Dampferzeuger nach einem der Ansprüche 1 bis 11 durchgeführt wird oder durchführbar ist.

13. Verfahren nach Anspruch 12,
**dadurch gekennzeichnet, dass**
die nachgewiesene Temperatur (T) des Wassers (22) im Wasserreservoir (14) mit einem unteren eingestellten Temperaturwert und einem oberen eingestellten Temperaturwert verglichen wird, wobei das Heizelement (20) mit höherer Energie aktiviert (60) wird, wenn die Temperatur (T) des Wassers (22) im Wasserreservoir (14) unter dem unteren eingestellten Temperaturwert liegt, oder das Heizelement (20) deaktiviert (62) wird, wenn die Temperatur (T) des Wassers (22) im Wasserreservoir (14) über dem oberen eingestellten Temperaturwert liegt, oder das Heizelement (20) in einem Simmermodus aktiviert (66) wird, wenn die Temperatur (T) des Wassers (22) im Wasserreservoir (14) zwischen dem unteren eingestellten Temperaturwert und dem oberen eingestellten Temperaturwert liegt.

14. Verfahren nach Anspruch 12 oder 13,
**dadurch gekennzeichnet, dass**
das Auffüllen (54) des Wasserreservoirs (14) in Schritt c) automatisch durch Öffnen und Schließen (56) zumindest eines Wasserhahns (28) erfolgt, der zwischen dem Wasserreservoir (14) und einer Wasserzufuhr angeschlossen ist, oder das Auffüllen (70) des Wasserreservoirs (14) in Schritt c) manuell vom Benutzer durchgeführt wird, nachdem ein Auffüllsignal ausgegeben (68) wurde.

## Revendications

1. Table de cuisson (10) munie d'au moins un générateur de vapeur :
- la table de cuisson (10) comprenant un panneau en vitrocéramique (12) comportant au moins un évidement (36),
- la table de cuisson (10) comprenant au moins un réservoir d'eau (14) disposé sous l'évidement (36),
- la table de cuisson (10) comprenant au moins un couvercle amovible (16) destiné à fermer l'évidement (36),
- la table de cuisson (10) comprenant au moins un élément chauffant (20) disposé en dessous, à côté et/ou à l'intérieur du réservoir d'eau (14), et
- le couvercle (16) étant ou pouvant être agencé dans l'évidement (36) du panneau en vitrocéramique (12), de sorte que les faces supérieures du couvercle (16) et du panneau en vitrocéramique (12) sont au même niveau et forment une face lisse, ou lisse et partiellement concave,
**caractérisée en ce que**
le couvercle (16) comporte plusieurs trous de couvercle (40) perméables à la vapeur (32), le couvercle (16) et/ou une partie du panneau en vitrocéramique (12) encerclant ledit couvercle (16) étant utilisés pour supporter un cuiseur à la vapeur standard (30) ou un cuiseur à la vapeur en bambou, de sorte que la vapeur (32) soit dirigée du réservoir d'eau (14) à travers les trous de couvercle (40) vers le cuiseur à la vapeur standard (30) ou le cuiseur à la vapeur en bambou respectivement, et le couvercle (16) comprenant un cadre de couvercle (18) fixé à une partie extérieure du côté inférieur dudit couvercle (16) et fait d'au moins un matériau polymère, et la table de cuisson (10) comprenant au moins un capteur de niveau d'eau (24, 26) disposé sur ou dans le réservoir d'eau (14), et la table de cuisson (10) comprenant un robinet à eau (28) connecté au réservoir (14), d'une part et pouvant être connecté ou relié à une alimentation en eau, d'autre part,
et la table de cuisson (10) comprenant au moins un capteur de température disposé sur ou dans le réservoir d'eau (14) et prévu pour détecter la température (T) de l'eau (22) dans le réservoir d'eau (14).

2. Table de cuisson selon la revendication 1,
**caractérisée en ce que** le couvercle (16) est en verre céramique, de préférence le couvercle (16) étant réalisé dans le même matériau que le panneau en vitrocéramique (12).

3. Table de cuisson selon la revendication 1 ou 2,
**caractérisée en ce que** la taille du couvercle (16) est légèrement inférieure à la taille de l'évidement (36) dans la plaque en vitrocéramique (12), l'évidement (36) étant de préférence réalisé sous la forme d'un trou circulaire, tandis que le couvercle (16) est réalisé sous la forme d'un disque circulaire.

4. Table de cuisson selon l'une quelconque des revendications précédentes,
**caractérisée en ce que** le réservoir d'eau (14) comprend une paroi latérale inclinée, le diamètre dudit réservoir d'eau (14) augmentant du bas vers le haut, et de préférence le couvercle (16) étant soutenu directement ou indirectement par la paroi latérale inclinée du réservoir d'eau (14).

5. Table de cuisson selon l'une quelconque des revendications précédentes,
**caractérisée en ce que** le cadre de couvercle (18) est supporté par la paroi latérale inclinée du réservoir d'eau (14) et, à son tour, le couvercle (16) est supporté par le cadre de couvercle (18).

6. Table de cuisson selon l'une quelconque des revendications précédentes,
**caractérisée en ce que** le cadre de couvercle (18) est collé sur la partie extérieure de la face inférieure du couvercle (16).

7. Table de cuisson selon l'une quelconque des revendications précédentes,
**caractérisée en ce que** le couvercle (16) comporte au moins une ouverture d'accès (38), en particulier deux ouvertures d'accès (38), de sorte que le couvercle (16) peut être retiré manuellement de l'évidement (36), de préférence au moins un trou étant formé sous ladite ouverture d'accès (38), de sorte que de l'eau condensée (34) peut être évacuée dans le réservoir (14).

8. Table de cuisson selon l'une quelconque des revendications précédentes,
**caractérisée en ce que** la table de cuisson (10) comprend un capteur de niveau d'eau maximum (24) pour détecter un niveau maximum autorisé de l'eau (22) dans le réservoir d'eau (14) et un capteur de niveau d'eau minimum (26) pour détecter un niveau minimum autorisé de l'eau (22) dans le réservoir d'eau (14).

9. Table de cuisson selon l'une quelconque des revendications précédentes,
**caractérisée en ce que** le robinet d'eau (28) peut être commandé automatiquement ou commandé par une unité de commande de la table de cuisson (10).

10. Table de cuisson selon l'une quelconque des revendications précédentes, **caractérisée en ce que** l'au moins un élément chauffant (20) est un élément chauffant à induction et/ou un élément chauffant tubulaire.

11. Table de cuisson selon l'une quelconque des revendications précédentes, **caractérisée en ce que** le couvercle (16) est réalisé sous la forme d'un disque conique ou concave, les points de sommet étant dirigés vers le bas, et un évidement central (44) étant de préférence réalisé dans ledit couvercle (16).

12. Procédé de commande d'un processus de cuisson à la vapeur réalisé par une table de cuisson (10) munie d'au moins un générateur de vapeur, ledit procédé comprenant les étapes consistant à :
a) démarrer (50) le processus de cuisson à la vapeur,
b) détecter (52) le niveau d'eau (22) dans un réservoir d'eau (14) du générateur de vapeur,
c) remplir (54) le réservoir d'eau (14), si le niveau d'eau est inférieur au niveau minimum de l'eau (22),
d) détecter (52) la température (T) de l'eau (22) dans le réservoir d'eau (14) et comparer (52) ladite température (T) avec au moins une valeur de température réglée,
e) activer (60) un élément chauffant (20) du générateur de vapeur à une puissance élevée, si la température (T) de l'eau (22) dans le réservoir d'eau (14) est inférieure à la température réglée,
f) désactiver (62) l'élément chauffant (20), si la température (T) de l'eau (22) dans le réservoir d'eau (14) est supérieure à la valeur de température réglée, et
g) émettre (64) un signal de surchauffe, si la température (T) de l'eau (22) dans le réservoir d'eau (14) est supérieure à la valeur de température réglée,
et dans lequel, de préférence, les étapes b) et d) sont répétées en continu et, si nécessaire, les étapes c), e), f) et/ou g), respectivement, sont ensuite exécutées,
**caractérisé en ce que**
le procédé est ou peut être exécuté par une table de cuisson (10) munie d'au moins un générateur de vapeur selon l'une quelconque des revendications 1 à 11.

13. Procédé selon la revendication 12, **caractérisé en ce que** la température détectée (T) de l'eau (22) dans le réservoir d'eau (14) est comparée à une valeur de température réglée inférieure et à une valeur de température réglée supérieure, dans lequel l'élément chauffant (20) est activé (60) à puissance élevée si la température (T) de l'eau (22) dans le réservoir d'eau (14) est inférieure à la valeur de température réglée inférieure, ou l'élément chauffant (20) est désactivé (62), si la température (T) de l'eau (22) dans le réservoir d'eau (14) est supérieure à la valeur de température réglée supérieure, ou l'élément chauffant (20) est activé (66) dans un mode de chauffe, si la température (T) de l'eau (22) dans le réservoir d'eau (14) est entre la valeur de température réglée inférieure et la valeur de température réglée supérieure.

14. Procédé selon la revendication 12 ou 13, **caractérisé en ce que** le remplissage (54) du réservoir d'eau (14) à l'étape c) est effectué automatiquement par ouverture et fermeture (56) d'au moins un robinet d'eau (28) relié entre le réservoir d'eau (14) et une alimentation en eau, ou le remplissage (70) du réservoir d'eau (14) à l'étape c) est effectué manuellement par l'utilisateur après la sortie (68) d'un signal de recharge.
